# EUROPÄISCHE PATENTSCHRIFT

(11) **EP 0 856 999 B1**
(45) Veröffentlichungstag und Bekanntmachung des Hinweises auf die Patenterteilung: **14.08.2002**
(21) Anmeldenummer: 98101595.1
(22) Anmeldetag: 30.01.1998
(51) Int. Cl.: H04Q 7/38, H04K 3/00

(54) **Vorrichtung zum Verhindern von Sendeaktivitäten einer Mobilfunkstation**
Device for preventing transmission from a mobile station
Dispositif pour empêcher la transmission d'une station mobile

(30) Priorität: 03.02.1997 DE 19703923
(43) Veröffentlichungstag der Anmeldung: 05.08.1998
(73) Patentinhaber: Linz, Joachim, 53117 Bonn (DE)
(72) Erfinder: Bäumle, Regina, 77756 Hausach (DE)
(74) Vertreter: Müller-Gerbes, Margot, Dipl.-Ing.

(56) Entgegenhaltungen:
- EP-A- 0 546 849
- EP-A- 0 568 824

## Beschreibung

Die Erfindung befaßt sich mit einem Sendestopper zum zum Verhindern von Sendeaktivitäten einer Mobilfunkstation, wie Mobiltelefon, eines Mobilfunksystems mit Mobilfunknetz mit stationären Basisfunkstationen, die Synchronisationsinformationssignale zum Empfang durch die Mobilfunkstation abstrahlen, um der Mobilfunkstation das Senden bei Empfang eines Empfangssignals mit einer einen Schwellenwert überschreitenden Empfangsleistung zu ermöglichen, umfassend Einrichtungen zum Erzeugen und Senden von Funksignalen als Störsignale (SIG-stop) in dem Frequenzbereich des relevanten zugehörigen Mobilfunknetzes mit einer Störspektrum-Erzeugungseinheit (SE), einer Abstrahleinrichtung (AE), einer Steuereinrichtung (ST)und einer Stromversorgung (SV).

Aus der EP-A-0568824 ist ein System zum Markieren von Zonen in einem Mobilfunknetz bekannt geworden, das insbesondere der Markierung der Mobilfunktelefone über Funksignale dient, wobei die Markierungsdaten vom Mobiltelefon benutzt werden, um dem Mobilfunknetz mitzuteilen, in welcher Zone das Mobiltelefon verwendet wird. Dies ist eine typischerweise gebührenrelevante Information. Das System gemäß der EP-A-0568824 zeichnet sich durch eine sehr präzise Definition der Zonengrenzen aus, die auch unter widrigen geografischen Verhältnissen unter Kontrolle gebracht werden. Das Verfahren benutzt hierzu ein Störsignal zu einem ganz bestimmten Zeitpunkt, nämlich dann, wenn ein Markierungssignal einer anderen Zone gesendet wird, das nicht von Mobiltelefonen, die sich in einem bestimmten Grenzbereich einer Zone befinden, empfangen werden soll. Die Entfernungen zwischen Zonengrenzen und Markierungssendern sind für das Timing von Bedeutung. Das Aussenden von Markierungsund Störsignalen an den verschiedenen Standorten des Systems wird durch einen Prozessor im Mobilnetz koordiniert, wobei mit diesem Verfahren die Nutzung von Mobiltelefonen definitiv möglich sein soll. Der Einsatz der Komponenten des Verfahrens erfordert die sorgfältige Einbeziehung in die Netzplanung unter Berücksichtigung der Topologie des Netzes, wobei das Störsignal schmalwandig und zeitlich genau definiert ist. Dieses Verfahren kann nicht zu dem Zweck eines Sendestoppers eingesetzt werden.

In Bereichen mit sicherheitsrelevanten elektronischen Geräten kann ein sendendes Mobiltelefon zu Störungen führen, die Gefahren verursachen können. Derzeit wird durch mündliche oder schriftliche Hinweise an Ort und Stelle auf solche Gefahren aufmerksam gemacht, z.B. in Flugzeugen durch die Stewardeß. Die Halter bzw. Nutzer von Mobiltelefonen, insbesondere sogenannten Handies, sind meist nicht als solche zu erkennen. Die für den Sicherheitsbereich verantwortlichen Personen sind daher darauf angewiesen, daß die potentiellen Nutzer sowohl diese Hinweise verstehen als auch verantwortungsvoll handeln und ihre Mobiltelefone ausschalten. Diese Lösung führt zu unkalkulierbaren Situationen und ist deshalb unbefriedigend.

Der Erfindung liegt die Aufgabe zugrunde, Mobilfunkstationen wie Mobiltelefone, die nach bestimmten Prinzipien funktionieren, am Senden zu hindern, um auf diese Weise ohne Mitwirkung der Besitzer oder potentiellen Nutzer die Gefahr sicherheitsrelevanter Störungen zu reduzieren insbesondere in räumlich und zeitlich begrenzten Bereichen.

Aus Akzeptanzgründen kann es wünschenswert sein, die durch den Sendestopper abgestrahlte Leistung und/oder Energie zu minimieren bishin zum einem Wert von Null in Gebieten ohne Mobilfunkversorgung.

Diese Aufgabe wird mit einem erfindungsgemäß gemäß Patentanspruch 1 ausgebildeten Sendestopper gelöst.

Vorteilhafte Ausgestaltungen des Sendestopppers sind den kennzeichnenden Merkmalen der Unteransprüche entnehmbar.

Ein erfindungsgemäßer Sendestopper weist folgende Merkmale auf und arbeitet wie folgt:
1.Der Sendestopper sendet Funksignale als Störsignale aus, die das Mobiltelefon daran hindern, sich auf eine sogenannte Basisfunkstation zu synchronisieren oder die Synchronisationsinformationssignale des Signalisierungskanals zu dekodieren oder allgemein die relevanten Signale des Mobilfunknetzes zu erkennen.
2.Der Sendestopper verhindert das Senden bei allen Mobilfunksystemen, die erst dann Sendekontakt mit den Basisfunkstationen aufnehmen, wenn die relevanten Synchronisationsinformationssignale der Basisfunkstation einwandfrei empfangen und erkannt worden sind.
3.Der Sendestopper verwendet ein Störsignal, das nach Art und Stärke keine negativen Einflüsse auf sich in dem zu schützenden Bereich vorhandene sicherheitsrelevante Elektronik hat.
4.Der Sendestopper ist so einstellbar, daß er keine störende Wirkung auf die Funknetze außerhalb des Sicherheits- und Schutzbereiches hat, innerhalb dessen er eingesetzt wird.
5.Optional ist der Sendestopper mit einer Ausrüstung versehen, mittels der er sich auf die Mobilfunksysteme (z.B. GSM oder CDMA oder andere) beschränken kann, die den fraglichen Schutzbereich versorgen.
6.Optional ist der Sendestopper mit einer Ausrüstung versehen, mittels der er die vorherrschenden Pegelwerte der vorhandenen Mobilfunknetze messen und einen optimalen Störpegel aussenden kann, der ausreicht, die Mobilfunkstationen, wie die Mobiltelefone, am Senden zu hindern.

Die Erfindung wird nachfolgend in Verbindung mit den Fig. 1 bis 3 beschrieben, wobei
- Fig. 1: den funktionalen Aufbau eines Sendestoppers darstellt
- Fig. 2: den funktionalen Aufbau einer Steuereinrichtung und
- Fig. 3: das Funktionsschema der Arbeitsweise des Sendestoppers in einem Mobilfunknetz unter Erzeugung eines Schutzbereiches.

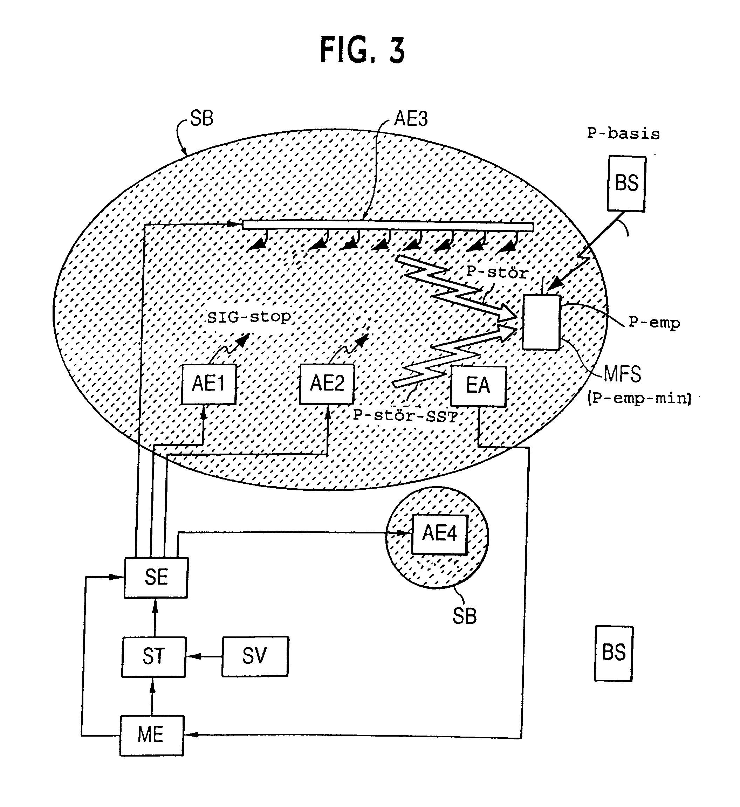

Ein Mobilfunksystem, bei dem die Erfindung anwendbar ist, siehe Fig. 3, besteht in der Regel aus mehreren Funkstationen, im Folgenden Basisfunkstationen genannt, die Synchronisationsinformationssignale mit einer gewissen Leistung P-basis abstrahlen. Die Leistung P-basis wird durch das Funkfeld gedämpft und die Signale kommen mit einer sehr viel geringeren Empfangsleistung P-emp an einer Mobilfunkstation an. Bevor diese Mobilfunkstation senden kann, um mit dem Mobilfunknetz Kontakt aufzunehmen, muß sie zunächst die Synchronisationsinformation einer für sie geeigneten Basisstation BS dekodieren. Dazu muß die Empfangsleistung P-emp der von der Basisfunkstation BS ausgesendeten und von der Mobilfunkstation empfangenen Signale mindestens einen Schwellenwert einer vorgebbaren Empfangsleistung P-emp-min überschreiten, der sich aus dem für das jeweilige Mobilfunksystem spezifischen minimalen Signalstörabstand sowie der auf dem Signalisierungskanal vorhandenen Störleistung P-stör ergibt.

Gleiches gilt für eine bereits sich im Sendezustand befindliche Mobilfunkstation MFS. Um die Verbindung aufrechterhalten zu können, muß ein während der Verbindung regelmäßig gesendetes Synchronisationsinformationssignal mit mindestens einer der Leistung P-emp-min entsprechenden Leistung bei der Mobilfunkstation ankommen, um von der Mobilfunkstation empfangen werden zu können. Anderenfalls wird die Verbindung nach einer in der Regel durch das Mobilfunksystem vorgegebenen Schutzzeit, die typischerweise im Bereich einiger Sekunden liegt, ausgelöst.

Das erfindungsgemäße Verfahren des Sendestoppers besteht darin, die in jedem Funkfeld vorhandene Störleistung P-stör, die zur Minderung der Sendeleistung P-basis bis zur Empfangsleistung P-emp führt, in einem zu schützenden Schutzbereich SB soweit zu erhöhen, daß in diesem Bereich die vorhandene Sendeleistung P-basis des Mobilfunknetzes an den im Schutzbereich SB befindlichen Mobilfunkstationen mit einer soweit geminderten Empfangsleistung P-emp ankommt, daß der Schwellenwert P-emp-min nicht mehr überschritten wird.

Damit ergeben sich folgende Stopbedingungen zum Stoppen oder Verhindern von Sendeaktivitäten einer Mobilfunkstation, wie Mobiltelefon:

Eine eingeschaltete, nicht sendende Mobilfunkstation MFS wird keine Sendeaktivitäten aufnehmen und eine sendende Mobilfunkstation nach kurzer Zeit aufhören zu senden, wenn sie auf dem oder den Kanälen, die eine nicht sendende Mobilstation benutzt, um sich auf ein Mobilfunknetz zu synchronisieren oder auf dem oder den Kanälen, die eine sendende Mobilfunkstation während einer Verbindung benutzt, zusätzlich ein Störsignal SIG-stop empfängt, das in diesem oder diesen Kanälen am Ort der Mobilfunkstationen eine so große Störsignalleistung besitzt, daß der Schwellenwert P-emp-min von dem Empfangssignal P-emp nicht erreicht wird. Das Störsignal SIG-stop umfaßt eine künstlich erzeugte zusätzliche Störleistung P-stör-SSP, die in Verbindung mit der bereits im Funkfeld allgemein vorhandenen Störleistung P-stör eine solche Dämpfung der Sendeleistung P-basis auf dem Weg zu der Mobilfunkstation bewirkt, daß der Schwellenwert der Empfangsleistung für die Mobilfunkstation nicht mehr erreicht wird.

Schutzbereich SB ergibt sich aus dem Gebiet, in dem diese Stoppbedingung erfüllt ist. Aufgabe des Sendestoppers ist es, Störsignale SIG-stopp mit einer entsprechenden Störleistung zu erzeugen und dadurch den Schutzbereich zu realisieren.

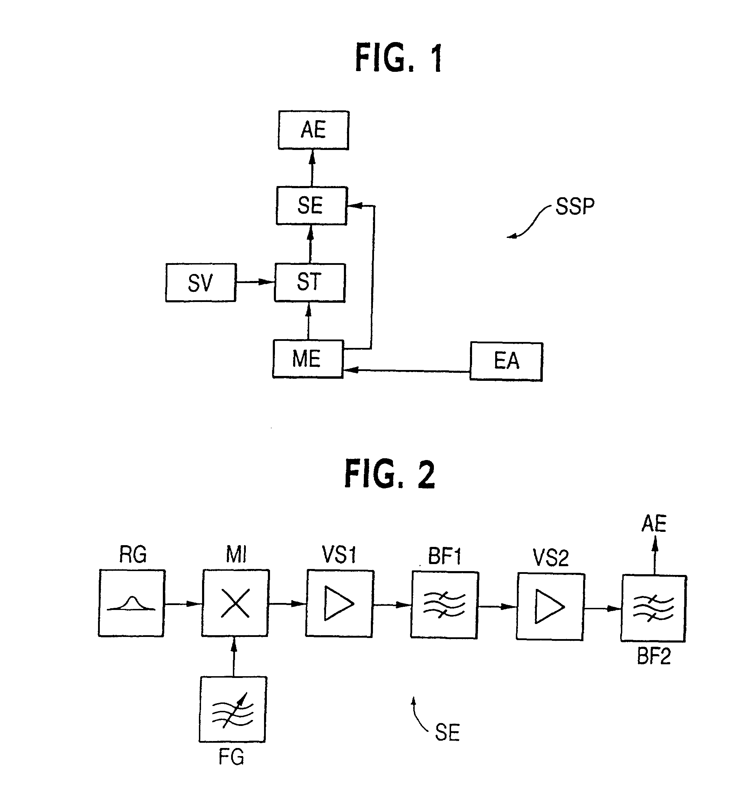

Der Sendestopper SSP, siehe Fig. 1, besteht im allgemeinen aus einer Störspektrum-Erzeugungseinheit SE, einer Abstrahleinrichtung AE, einer Steuereinrichtung ST, einer Stromversorgung (SV) und optional einer Meßeinheit ME.

Für die Ausführung der Störspektrum-Erzeugungseinheit SE gibt es verschiedene bekannte Verfahren. Die maximale Ausgangsleistung der SE wird typischerweise im Bereich von -10 dBm bis + 20 dBm liegen. Die durch die SE generierte Störsignalform muß allgemein so gewählt werden, daß die Stoppbedingungen erfindungsgemäß erfüllbar sind. Um aber eine Beeinflussung anderer als der Mobilfunkstationen zu verhindern, wird vorteilhafterweise eine Signalform verwendet, die im zu schützenden Frequenzbereich FB-schutz eine gleichmäßig verteilte Leistung, außerhalb dieses Bereiches aber möglichst wenig Leistung besitzt. Insbesondere wird auch eine von Zeitmultiplex-Systemen, wie zum Beispiel dem GSM-System bekannte, gepulste Leistung verzichtet. Stattdessen wird vorgeschlagen, daß man ein breitbandiges Pseudo-Rauschsignal oder eine dem Kanalraster des Mobilfunksystems entsprechende Schar von diskreten Trägersignalen oder ein entsprechend frequenzmoduliertes Signal als Störsignal verwendet.

Die Störspektrum-Erzeugungseinheit SE kann zum Beispiel, wie in Fig. 2 dargestellt, aus einem breitbandigen Pseudo-Rauschgenerator RG, einem Frequenzgenerator FG zur Erzeugung der Trägerfrequenz, einer Mischstufe MI zur Transformation des Basissignals in das gewünschte Frequenzband einer Verstärkerstufe VSI zum Entkoppeln des Signals, einem Bandpaßfilter BF1 zur Erzeugung des gewünschten Frequenzspektrums im zu störenden Frequenzbereich FB-stop, einer weiteren durch die SE gesteuerten Verstärkerstufe VS2 zur Leistungsverstärkung sowie einem weiteren Bandpaßfilter BF2 zur Begrenzung des Sendestopper-Störsignals außerhalb des FB-stop bestehen.

Die Abstrahleinrichtung AE kann eine einzelne Antenne zur Realisierung eines diskreten Abstrahlpunkte oder eine Kombination von räumlich verteilten Antennen AE1 und AE2 oder ein Schlitzkabel, wie Leckkabel AE3 oder eine Kombination dieser Einrichtungen sein. Da sich das Funkfeld sowohl der Basisfunkstationen als auch des Sendestoppers nicht genau begrenzen läßt, gibt es an den Rändern des Schutzbereiches SB einen zeitlich und räumlich variablen Grenzbereich mit einem undefinierten Verhalten der Mobilfunkstationen. Die Größe des Grenzbereiches läßt sich durch entsprechende Wahl der Abstrahleinrichtung AE minimieren.

Die Steuereinrichtung ST im einfachsten Fall aus Elementen zum Ein- und Ausschalten des Sendestoppers bestehen, oder zusätzlich zum Beispiel eine Leistungssteuerung oder Leistungsregelung für das Störsignal SIG-stop und/oder eine Komponentenüberwachung und Funktionsanzeige enthalten.

Die Stromversorgung SV versorgt die Komponenten des Sendestoppers mit Strom, den sie beispielsweise aus einem vorhandenen Bordnetz oder bei kleinen mobilen Ausführungen aus Akkumulatoren bezieht.

Aus Akzeptanzgründen kann es wünschenswert sein, die durch den Sendestopper abgestrahlte Leistung und/oder Energie zu minimieren bishin zum einem Wert von Null in Gebieten ohne Mobilfunkversorgung.

Zur Minimierung der abgestrahlten Leistung kann der Sendestopper daher optional mit einer Meßeinrichtung ME ausgerüstet sein, die das Sendestoppersignal SIG-stop in seiner Stärke dem zu störenden Signal so anpaßt, daß nur soviel Leistung abgestrahlt wird, wie benötigt wird, um die Stoppbedingung sicher zu erfüllen.

Die Meßeinrichtung ME mißt dazu regelmäßig auf allen Kanälen des zu schützenden Frequenzbereiches die von Mobilfunknetzen empfangbare Leistung und steuert die Leistung des Sendestoppersignals SIG-stop entsprechend über die Steuereinrichtung ST.

Die Meßeinrichtung ME besteht beispielsweise aus einer oder mehreren Empfangsantennen EA, die innerhalb oder außerhalb des Schutzbereiches SB angebracht sein können, des weiteren einem Meßempfänger, einer Auswerte- und Steuereinrichtung, die die vom Meßempfänger gelieferten Informationen umsetzt in Steueranweisungen für die Steuereinrichtung. Die ME wird von der Stromversorgung SV des Sendestoppers versorgt. Als Empfangsantenne EA kann optional auch die Abstrahleinrichtung AE des Sendestoppers verwendet werden.

Um eine Beeinflussung der Meßeinrichtung ME durch die vom Sendestopper abgestrahlte Leistung zu verhindern, kann die Auswerte- und Steuereinrichtung das Störsignal SIG-stop während des Zeitraumes T-meß der Messung des Mobilfunksignales abschalten. T-meß muß dabei kürzer gewählt werden als die Synchronisationszeit der Mobilfunkstation, wie Mobiltelefon, die typischerweise einige Sekunden beträgt.

Zur Minimierung der abgestrahlten Energie kann die Trägheit der Mobilfunkstationen bei der Wiedersynchronisation auf einer Basisfunkstation nach einem Synchronisationsverlust ausgenutzt werden: Es kann optional die Steuereinrichtung durch eine zeitabhängige Steuerung so erweitert werden, daß das Störsignal SIG-stop nur zeitweise erzeugt und so die vom Sendestopper abgestrahlte mittlere Energie reduziert wird.

Zur Verbesserung des Services zum Beispiel in Flugzeugen kann der Sendestopper außerhalb kritischer Phasen, beim Flugzeug zum Beispiel in großen Höhen, während des Fluges oder längerer Wartezeiten am Boden deaktiviert werden. Auf diese Weise könnte den Passagieren während längerer Bodenzeiten das Telefonieren wieder gestattet werden, da erforderlichenfalls jederzeit durch Aktivieren des Sendestoppers, was vom Servicepersonal durch eine Ansage angekündigt werden kann, eine Deaktivierung aktiver Mobilfunkstationen, wie Mobilfunktelefone, innerhalb einer Zeitspanne von einigen Sekunden sichergestellt ist. Dazu kann der Sendestopper optional Bedienelemente enthalten, die zum Beispiel eine Steuerung sowohl aus einer Flugzeugkabine als auch aus dem Cockpit des Flugzeuges heraus gestatten.

Der von einem Sendestopper erzeugte Schutzbereich SB muß nicht zusammenhängend sein. So kann zum Beispiel eine Erweiterung des Schutzbereiches der Flugzeugkabine in den Gepäckraum durch Hinzufügen einer über ein Kabel mit der Störspektrum-Erzeugungseinheit SE verbundenen Abstrahleinrichtung AE sinnvoll sein, siehe AE4 in Fig. 3, da nicht deaktivierte Mobilfunktelefone hier auf Grund der fehlenden Einflußmöglichkeiten während des Fluges ein besonderes Risiko darstellen können.

Die räumliche Begrenzung des Schutzbereiches SB erfolgt durch geeignete Wahl der Leistung des zu erzeugenden Störsignales SIG-stop sowie durch geeignete Wahl des Ortes und der Art der Abstrahleinrichtung AE. Die erforderliche Leistung des SIG-stop ergibt sich aus der Stoppbedingung sowie einem Sicherheitszuschlag, der sich aus den anzuwendenden Fadingund Shadowing-Werten ergibt und typischerweise in der Größe von 5 bis 10 Dezibel liegen wird. Zur sicheren Einhaltung der Stoppbedingungen müssen auf Grund der Veränderlichkeit des Mobilfunkfeldes bei Fehlen einer Meßeinrichtung ME Annahmen über die maximal zu erwartenden Leistungspegel des Mobilfunknetzes im zu realisieren Schutzbereich SB getroffen werden.

Der Sendestopper könnte z.B. in einem Flugzeug eingesetzt werden, das sich auf einem Flughafen befindet, der von Mobilfunknetzen versorgt wird, die auf dem GSM-Standard basieren. Das Störsignal des Sendestoppers, das in diesem Fall in den GSM-Frequenzbereich gelegt wird, muß in seiner Stärke so eingestellt werden, daß das Auslesen der BCCH-Kanäle der versorgenden Basisfunkstationen durch die Mobiltelefone verhindert wird, oder das Empfangen der Nachrichten auf dem TCH bei Mobiltelefonen, die gerade zum Telefonieren benutzt werden, unterbunden wird. Ein GSM-konformes Mobiltelefon wird in diesem Fall nicht versuchen zu senden. Die Stärke des Störsignals des Sendestoppers kann sehr viel geringer eingestellt werden als die des Sendesignals des Mobiltelefons, da der Sendestopper dem Mobiltelefon sehr viel näher ist als das Mobiltelefon der Basisfunkfeststation des GSM-Netzes. Dadurch ist die Beeinflussung der sicherheitsrelevanten Elektronik durch den Sendestopper sehr gering.

Des weiteren ist es auch möglich, einen Sendestopper, mit der Möglichkeit verschiedene Störsignale gleichzeitig auszustrahlen, auszustatten, so daß in einem zu schützenden Bereich verschiedene auf unterschiedlichen Frequenzen sendende Mobilfunksysteme bzw. Mobilfunkstationen entsprechend zeitweilig am Senden gehindert werden können.

## Patentansprüche

1. Sendestopper zum Verhindern von Sendeaktivitäten einer Mobilfunkstation, wie Mobiltelefon, eines Mobilfunksystems mit Mobilfunknetz mit stationären Basisfunkstationen, die Synchronisationsinformationssignale zum Empfang durch die Mobilfunkstation abstrahlen, um der Mobilfunkstation das Senden bei Empfang eines Empfangssignals mit einer einen Schwellenwert überschreitenden Empfangsleistung zu ermöglichen, umfassend Einrichtungen zum Erzeugen und Senden von Funksignalen als Störsignale (SIG-stop) in dem Frequenzbereich des relevanten zugehörigen Mobilfunknetzes mit einer Störspektrum-Erzeugungseinheit (SE), einer Abstrahleinrichtung (AE), einer Steuereinrichtung (ST) und einer Stromversorgung (SV),
**dadurch gekennzeichnet, daß** eine Meßeinheit (ME) zum Messen der von der Mobilfunkstation zu empfangenden Leistung (P-emp) vorgesehen ist und mittels der erhaltenen Meßwerte das Störsignal (SIG-stop) in seiner Stärke steuerbar ist, dergestalt, daß die Leistung (P-basis) des von der Basisfunkstation abgestrahlten Synchronisationsinformationssignals außer von der im Mobilfunknetz vorhandenen Störleistung (P-stör) durch die zusätzliche künstlich erzeugte steuerbare Störleistung (P-stör-SSP) in Gestalt des Störsignals (SIG-stop), infolgedessen die vorhandene Störleistung im Mobilfunknetz erhöht wird, beeinträchtigt wird, und das von der Basisfunkstation abgestrahlte Synchronisations-informationssignal bei Empfang durch die Mobilfunkstation nur noch eine Leistung (P-emp) aufweist, die den Schwellenwert (P-emp-min) der Mobilfunkstation nicht mehr überschreitet.

2. Sendestopper nach Anspruch 1,
**dadurch gekennzeichnet, daß** die Meßeinheit aus einer oder mehreren Empfangsantennen (EA) besteht, die innerhalb oder außerhalb des Schutzbereich (SB) angeordnet sind, sowie einen Meßempfänger, eine Auswerte- und Steuereinrichtung, die die von dem Meßempfänger gelieferten Informationen in Steueranweisungen für die Steuereinrichtung (ST) umsetzt und die von der Stromversorgung (SV) des Sendestoppers versorgt wird, umfaßt.

3. Sendestopper nach Anspruch 2,
**dadurch gekennzeichnet, daß** als Empfangsantenne (EA) eine Abstrahleinrichtung (AE) des Sendestoppers verwendbar ist.

4. Sendestopper nach einem der Ansprüche 1 bis 3,
**dadurch gekennzeichnet, daß** die Störspektrum-Erzeugungseinheit einen breitbandigen Pseudo-Rauschgenerator (RG), einen Frequenzgenerator (FG) zur Erzeugung der Trägerfrequenz, eine Mischstufe (MI) zur Transformation des Basissignals in das gewünschte Frequenzband, eine Verstärkerstufe (VSI) zum Entkoppeln des Signals, einen Bandpaßfilter (BF1) zur Erzeugung des gewünschten Frequenzspektrums in dem zu störenden Frequenzbereich (FB-stop), eine weitere durch die Störspektrum-Erzeugungseinheit (SE) gesteuerte Verstärkerstufe (VS2) zur Leistungsverstärkung sowie einen weiteren Bandpaßfilter (BF2) zur Begrenzung des Sendestoppersignals außerhalb des zu störenden Frequenzbereiches umfaßt.

5. Sendestopper nach einem der Ansprüche 1 bis 4,
**dadurch gekennzeichnet, daß** die Abstrahleinrichtung (AE) eine einzelne Antenne zur Realisierung eines diskreten Abstrahlpunktes oder eine Kombination von räumlich verteilten Antennen (AE1 und AE2) oder ein Schlitzkabel (AE3) oder eine Kombination der vorgenannten Einrichtungen aufweist.

6. Sendestopper nach einem der Ansprüche 1 bis 5, **dadurch gekennzeichnet, daß** die Steuereinrichtung aus Elementen zum Ein- und Ausschalten des Sendestopper besteht und gegebenenfalls eine Leistungssteuerung oder -regelung für das Steuersignal und/oder eine Komponentenüberwachung und Funktionsanzeige umfaßt.

7. Sendestopper nach einem der Ansprüche 1 bis 6,
**dadurch gekennzeichnet, daß** die Leistung des Störsignals (SIG-stop) des Sendestoppers nach Art und Stärke einstellbar ist, dergestalt, daß keine Störung außerhalb des Schutzbereiches (SB) bewirkt wird sowie keine negativen Einflüsse auf sicherheitsrelevante in dem Schutzbereich sich befindende Geräte ausgeübt werden.

8. Sendestopper nach einem der Ansprüche 1 bis 7,
**dadurch gekennzeichnet, daß**, um die Beeinflussung der Meßeinheit durch die vom Sendestopper abgestrahlte Leistung zu vermeiden, die Auswerte- und Steuereinrichtung (AW) eine Arbeitsweise dergestalt aufweist, daß das Störsignal (SIG-stop) während des Zeitraumes (T-meß) der Messung des Mobilfunksignales abgeschaltet wird, wobei der Zeitraum (T-meß) kleiner gewählt werden muß als die Synchronisationszeit der Mobilfunkstation.

9. Sendestopper nach einem der Ansprüche 1 bis 8,
**dadurch gekennzeichnet, daß** das künstlich erzeugte Störsignal SIG-stop entsprechend seiner Störleistung die Größe des Schutzbereiches und entsprechend seiner Sendedauer den Zeitraum bestimmt, in dem die Sendeaktivitäten einer sich in dem Schutzbereich befindenden Mobilfunkstation verhinderbar sind.

10. Sendestopper nach einem der Ansprüche 1 bis 9,
**dadurch gekennzeichnet, daß** eine maximale Störleistung im Bereich von -10dBm bis +20 dBm erzeugbar ist.

11. Sendestopper nach einem der Ansprüche 1 bis 10,
**dadurch gekennzeichnet, daß** als Störsignal ein breitbandiges Pseudo-Rauschsignal oder eine den Kanalraster des Mobilfunksystems entsprechende Schar von diskreten Trägersignalen oder ein entsprechend frequenzmoduliertes Signal verwendet ist.

## Claims

1. Transmission blocker to prevent transmitting activities of a mobile radio station, like a mobile telephone, a mobile radio system with a mobile radio network with stationary base radio stations, transmitting signals as synchronization information for reception by the mobile radio station in order to allow the mobile radio station to transmit when receiving a receiving signal with a receiving power that exceeds a predetermined threshold value, including devices for generating and transmitting radio signals as interference signals (SIG-stop) in the frequency range of the relevant corresponding mobile radio network with an interference spectrum generating unit (SE), a radiating unit (AE), a control device (ST) and a power supply (SV), **characterized in that** a measuring unit (ME) is provided for measuring the power (P-emp) to be received by the mobile radio station, and the power of the interference signal (SIG-stop) can be controlled by the measured values received, whereby the basic power (P-basis) of the base radio stations radiating signals as synchronization information is affected by the interference power (P-stör) being present in the mobile radio network and by the additionally generated and controlled interference signal power (P-stör-SSP) according to the interference signal (SIG-stop), whereby the interference power being present in the mobile radio network is raised up, and the base radio stations radiating signals as synchronization information upon reception by the mobile radio station having a basic power (P-emp), which no longer exceeds the threshold value of the receiving power (P-emp-min).

2. Transmission blocker according to Claim 1, **characterized in that** the measuring unit consists of one or more receiving antennas (EA), located inside or outside the protected area (SB), as well as a measuring receiver, and an evaluating and control device that converts the information supplied by measuring receiver into control instructions to control device (ST), and which is supplied by power supply (SV) of the transmission blocker.

3. Transmission blocker according to Claim 2, **characterized in that** a radiating device (AE) of the transmission blocker can be used as a receiving antenna (EA).

4. Transmission blocker according to one of Claims 1 to 3, **characterized in that** the interference spectrum generating unit for generating interference signal (SS) comprises a broadband pseudo interference generator (RG), a frequency generator (FG) for generating a carrier frequency, a mixer stage (MI) for transforming the base signal into the desired frequency band, an amplifier stage (VSI) for decoupling the interference signal, a bandpass filter (BF1) for generating the desired frequency spectrum in the frequency range to be interfered with (FB-stop), another amplifier stage (VS2) controlled by interference spectrum generating unit (SE) for power amplification, and an additional bandpass filter (BF2) for limiting the interference signal outside the frequency range to be interfered with.

5. Transmission blocker according to one of Claims 1 to 4, **characterized in that** radiating device (AE) has a single antenna for creating a discrete radiating point or a combination of spatially distributed antennas (AE1 and AE2) or a slotted cable (AE3) or a combination of the above devices.

6. Transmission blocker according to one of Claims 1 to 5, **characterized in that** the control device consists of elements for turning the transmission blocker off and on and possibly includes power control or regulation for the signal and/or a component monitoring system and function display.

7. Transmission blocker according to one of Claims 1 to 6, **characterized in that** the power of interference signal (SIG-stop) of the transmission blocker can be adjusted in form and strength in such fashion that no disturbance is caused outside protected area (SB) and no negative influence is exerted on safety-relevant devices located in the protected area.

8. Transmission blocker according to one of Claims 1 to 7, **characterized in that**, in order to avoid influencing measuring unit by the power radiated by the interference spectrum generating unit, the evaluation and control device (AW) has a mode of operation such that interference signal (SIG-stop) is switched off during the period of time (T-meß) that signal is being measured, with period of time (T-meß) having to be chosen to be shorter than the synchronization time of the mobile radio station.

9. Transmission blocker method according to one of Claims 1 to 8, **characterized in that** the interference signal power of interference signal (SIG-stop) determines the spatial extent of a protected area and the transmission time of interference signal determines the space of time during which the transmission activities of a mobile radio station located in protected area can be prevented.

10. Transmission blocker according to one of Claims 1 to 9, **characterized in that** a maximum interference signal power is generated in the range from - 10 dBm to + 20 dBm.

11. Transmission blocker according to one of Claims 1 to 10, **characterized in that** a broadband pseudo-interference signal or a family of discrete carrier signals that corresponds to a channel grid of the mobile radio system or a correspondingly frequency-modulated signal is used as interference signal.

## Revendications

1. Bloqueur d'émission pour empêcher les activités d'émission d'une station mobile , comme un téléphone mobile, d'un système de téléphonie mobile avec un réseau de téléphonie mobile avec des stations de base stationnaires qui émettent des signaux d'information de synchronisation destinés à être reçus par les stations de téléphonie mobile pour permettre à la station de téléphonie mobile d'émettre en réponse à une réception d'un signal de réception dépassant une valeur de seuil de puissance de réception , le bloqueur d'émission comportant des dispositifs pour générer et émettre des signaux radio en tant que signaux de brouillage (SIG-stop) dans la gamme des fréquences du réseau de téléphonie mobile associé concerné au moyen d'une unité génératrice de spectre de brouillage (SE), un dispositif d'émission (AE), un dispositif de commande (ST) et une alimentation électrique (SV)
**caractérisé en ce qu'**il est prévu une unité de mesure (ME) pour mesurer la puissance (P-emp) destinée à être reçue par la station de téléphonie mobile et dont la puissance peut être commandée au moyen des valeurs de mesure reçues , de manière à ce que la puissance (P-basis) du signal d'information de synchronisation émis par la station de base n'est pas seulement gênée par la puissance de brouillage (P-stör) existant dans le réseau de téléphonie mobile mais aussi par la puissance de brouillage (P-stör-SSP) susceptible d'être commandée et générée artificiellement de façon supplémentaire, grâce à laquelle la puissance de brouillage existant dans le réseau de téléphonie mobile est augmentée, et le signal d'information de synchronisation émis par la station de base présente à la réception par la station de téléphonie mobile uniquement une puissance (P-emp) qui ne dépasse plus la valeur de seuil (P-emp-min) de la station de téléphonie mobile.

2. Bloqueur d'émission selon la revendication 1,
**caractérisé en ce que** l'unité de mesure est composée d'une ou plusieurs antennes de réception (EA) qui sont disposées à l'intérieur ou à l'extérieur de la zone de protection (SB), et d'un récepteur de mesure , d'un dispositif d'évaluation et de commande qui transforme les informations fournies par le récepteur de mesure en ordres de commande pour le dispositif de commande et qui est alimenté par l'alimentation électrique (SV) du bloqueur d'émission.

3. Bloqueur d'émission selon 1a revendication 2,
**caractérisé en ce qu'**un dispositif d'émission (AE) du bloqueur d'émission peut être utilisé en tant qu'antenne de réception (EA).

4. Bloqueur d'émission selon la revendication 1 à 3,
**caractérisé en ce que** l'unité génératrice de spectre de brouillage comporte un pseudo-générateur de bruit (RG) à bande large, un générateur de fréquence (FG) pour générer la fréquence porteuse , un étage mélangeur (MI) destiné à transformer le signal de base dans la bande de fréquence souhaitée, un étage amplificateur (VSI) destiné à découpler le signal, un filtre passe bande (BF1) destiné à générer le spectre de fréquence souhaité dans la gamme des fréquences à brouiller (FB-stop), un autre étage amplificateur (VS2) pour amplifier la puissance , commandé par l'unité génératrice de spectre de brouillage (SE), et un autre filtre passe bande (BF2) destiné à limiter le signal du bloquer d'émission à l'extérieur de la gamme des fréquences à brouiller.

5. Bloqueur d'émission selon la revendication 1 à 4,
**caractérisé en ce que** le dispositif d'émission (AE) comporte une seule antenne pour réaliser un point discret d'émission ou une combinaison d'antennes (AE1 et AE2) distribuées dans l'espace ou un câble à fentes (AE3) ou une combinaison des dispositifs précités.

6. Bloqueur d'émission selon 1a revendication 1 à 5,
**caractérisé en ce que** le dispositif de commande comprend des éléments pour mettre en marche ou hors service le bloqueur d'émission et éventuellement une commande ou régulation de puissance pour le signal de commande et/ou un dispositif de surveillance de composants et un affichage des fonctions.

7. Bloqueur d'émission selon la revendication 1 à 6,
**caractérisé en ce que** la puissance du signal de brouillage (SIG-stop) du bloqueur d'émission peut être réglées selon le type et puissance de manière à ce qu'aucun brouillage a lieu en dehors de la zone de protection (SB) et aucune influence négative est exercée sur les appareils de sécurité se trouvant dans 1a zone de protection.

8. Bloqueur d'émission selon la revendication 1 à 7,
**caractérisé en ce que** le dispositif d'évaluation et de commande (AW) travaille , pour éviter d'influencer l'unité de mesure par la puissance émise par le bloqueur d'émission, de telle manière à ce que le signal de brouillage (SIG-stop) est mis hors service pendant la durée (T-meβ) de la mesure du signal de téléphonie mobile, la durée (T-meβ) devant être choisie plus petit que le temps de synchronisation de la station de téléphonie mobile.

9. Bloqueur d'émission selon la revendication 1 à 8,
**caractérisé en ce que** le signal de brouillage généré artificiellement SIG-stop détermine selon sa puissance de brouillage la dimension de la zone de protection et détermine selon sa durée d'émission la durée pendant laquelle les activités d'émission d'une station de téléphonie mobile sont susceptibles d'être empêchées dans la zone de protection.

10. Bloqueur d'émission selon la revendication 1 à 9,
**caractérisé en ce qu'**une puissance maximale de brouillage est susceptible d'être générée dans la zone entre -10 dBm et +20 dBm.

11. Bloqueur d'émission selon la revendication 1 à 10,
**caractérisé en ce que** en tant que signal de brouillage est utilisé un pseudo-signal de bruit à bande large ou un groupe de signaux porteurs discrets correspondant à la grille des canaux du système de téléphonie mobile ou un signal modulé de façon correspondante en fréquence.
